# EUROPEAN PATENT SPECIFICATION

(11) **EP 4 459 237 B1**
(45) Date of publication and mention of the grant of the patent: **21.01.2026**
(21) Application number: 23171887.5
(22) Date of filing: 05.05.2023
(51) Int. Cl.: G01D 5/347

(54) **NON-FOGGING OPTICAL SCALES AND SCANNING RETICLES COATED BY HYDROPHILIC DIAMOND-LIKE CARBON FILMS**
BESCHLAGFREIE OPTISCHE SKALEN UND ABTASTRASTER MIT HYDROPHILEN DIAMANTARTIGEN KOHLENSTOFFSCHICHTEN
BALANCE OPTIQUE SANS BUEE ET RETICULES DE BALAYAGE REVETUS DE FILMS HYDROPHILES DE CARBONE DE TYPE DIAMANT

(43) Date of publication of application: 06.11.2024
(73) Proprietor: Kaunas University of Technology, 44249 Kaunas (LT)
(72) Inventor: Meskinis, Sarunas, LT-45485 Kaunas (LT); Jucius, Dalius, LT-49299 Kaunas (LT); Vasiliauskas, Andrius, LT-51277 Kaunas (LT); Gudaitis, Rimantas, LT-50154 Kaunas (LT); Grigaliunas, Viktoras, LT-49358 Kaunas (LT); Lazauskas, Algirdas, LT-45319 Kaunas (LT); Guobiene, Asta, LT-53332 Kaunas (LT); Abakeviciene, Brigita, LT-46383 Kaunas (LT); Juodenas, Mindaugas, LT-46326 Kaunas (LT); Kasparaitis, Albinas, LT-03154 Vilnius (LT)
(74) Representative: Klimaitiene, Otilija

(56) References cited:
- DE-A1- 10 056 605
- JP-A- 2021 192 008
- US-A1- 2013 344 290

## Description

### FIELD OF INVENTION

The present invention relates to optical measurements and optical scales for absolute and incremental photoelectric encoders. More specifically, it relates to non-fogging optical scales and scanning reticles protected by hydrophilic diamond-like carbon (DLC) films with excellent scratch and wear resistance and anti-fogging properties.

### BACKGROUND ART

Air becomes saturated with water vapor at temperatures below the dew point, and condensation occurs. Water condensation on optically transparent surfaces causes their fogging, resulting in a significantly reduced optical transmittance or distorted optical image behind the fogged surface. The fogging problem is also very relevant for photoelectric encoders, where fogging of scanning reticles and linear or rotary optical scales, consisting of micrometer-scale reflective metallic patterns on the glass substrate, can increase measurement errors or even completely disrupt the operation of the devices.

The patented designs do not protect against the optical encoder's fogging while ensuring protection from mechanical and chemical impacts.

The Japanese patent application No. JP2021192008A presents an encoder scale capable of suppressing deterioration of scale accuracy. The manufacturing method of a scale includes a contacting step in which a first glass substrate on which a scale pattern with a predetermined period is formed on a first major surface and a second glass substrate on which a recess is formed on a second major surface are brought into contact so that the first major surface and the second major surface face each other and the recess covers the scale pattern, and a glass bonding step in which the first glass substrate and the second glass substrate are glass-bonded. Such scale is not protected against fogging.

The German patent application No. DE10056605A relates to a method for evaluating the signals of an optoelectronic displacement or angle measuring device, consisting of a code disc that can move relative to a transmitter-receiver unit comprising a light source and a sensor array. The invention involves detection of the signal amplitude of a reference signal and adjusting it with the aim to compensate changes in the light scattering. The use of such a method increases the complexity of the measuring device and, due to the increase in noise, when the amplitude of the signal is increased, it can reduce the brightness difference between code track signal when exposed to light and non-track signal.

The US patent No. US8739425B2 describes the design of the optical encoder coordinates positioning apparatus. The apparatus comprises a mounting surface, a motion guide that is mountable on the mounting surface, a first member comprising a sensor for sensing scale markings, the first member is mounted on the motion guide, and an encoder scale member comprising a first set of scale markings that are, in use, sensible by the sensor. The sensor may include a transparent window on which a grating may be formed. The surface of the window nearest the scale in use may have a scratch-resistant coating, possibly a DLC coating.

The European patent No. EP2112477B1 provides a thin metal tape-substrate-based scale for a photoelectric encoder. In that patent, the light-absorption layer having the chemically stable and mechanically durable DLC layer protects the thin metal plate-based substrate from corrosion, rust, and flaws while ensuring the function of the light-absorbing layer.

The US patent application No. US20060226830A1 describes the magnetic encoder element with the encoding zone protected by a thin layer of DLC deposited by plasma directly on the encoder element. The protective layer significantly increases the ability of the magnetizable polymer surface to withstand abrasion, giving it a long lifetime when the displacement encoder is used in an aggressive environment. The protective layer can also form a barrier against substances that could subject the polymer to chemical attack.

Currently, many different optically transparent, anti-fogging, and mechanical impact-resistant coatings devoted to glass and plastic optical components are on the market (EP3444641A1, EP3508889A1, US20180113297A1, US11161926B2, US20190324341 A1, FR3067970B1, CN108717213A, CN106835043B, CN109135487B). However, such coatings have not been used so far for optical scales and reticles. In addition, most of them are polymeric and cannot ensure adequate resistance to scratching and wear.

DLC coatings are more scratch and wear-resistant. The patents described below relate to using advanced hydrophilic DLC coatings, potentially suitable for anti-fogging applications. However, it should be noted that most of these patents focus on the deposition of hydrophilic DLC coatings and do not address fogging issues.

The US patent application No. US20130344290A1 provides nanostructured multilayer articles that demonstrate antireflective properties and are suitable for covering displays, windows, and eyeglass lenses. Such articles can comprise additional functional layers exhibiting improved adhesion, durability, light absorbing or antifogging properties. Production of such multilayers is quite expensive, as it requires nanostructuring of the surface of one or more films, which can be performed using lithography and anisotropic etching.

The US patent No. US9670092B2 discloses an anti-condensation layer on the glass window comprising silicon nitride and/or silicon oxynitride, a transparent conductive oxide, a film comprising silicon nitride, and a film comprising at least one of zirconium oxide, zirconium nitride, aluminum oxide, and aluminum nitride. In that patent, a hydrophilic DLC film can be deposited on top of the zirconium oxide film to create a more survivable, hydrophilic-like coating. However, no details regarding the hydrophilic DLC film's composition, structure, or deposition conditions are provided.

In the US patent application No. US20060246218A1, the hydrophilic DLC surface fabricated by additional post-deposition treatment using barrier discharge pyrolysis, is described. As a result, the oxygen radicals from the plasma cause at least the surface of the DLC inclusive layer to oxidize, which in turn causes its contact angle to drop rapidly in a short period. In certain example embodiments of this invention, a coated article is provided. A coating layer includes both sp² and sp³ carbon-carbon bonds and has a surface energy of at least about 20 mN/m, more preferably at least about 24 mN/m, and most preferably at least about 26 mN/m.

In the US patent No. US6303225B1, the DLC coating was doped with nitrogen (N) and boron (B) to make it more polar and, therefore, more hydrophilic. The optimal ratio of N to B was approximately 2:1 and resulted in a contact angle θ with a drop of water no greater than about 10°.

The US patent No. US6793979B2 discloses a DLC film doped with at least one polar-inducing dopant (e.g., B, N, and/or any other suitable dopant) to make the layer more hydrophilic. Furthermore, this film can be exposed to ultraviolet (UV) radiation sufficiently to cause the contact angle of the DLC layer to drop into a hydrophilic range (for example, the contact angle θ less than or equal to about 20°).

In the US patent No. US7455883B2, the DLC-inclusive coating is treated using flame pyrolysis to cause the coating to become hydrophilic and/or reduce its contact angle. Optionally, the DLC-inclusive coating may also be treated with an ion beam that includes oxygen and/or hot water (e.g., hot water in liquid and/or vapor form). Optionally, polar-inducing dopant(s) (e.g., B, N, P, As, S, Sb, Ga, In, and/or any other polar-inducing dopant) may be provided in the DLC in addition to the ion beam treatment to help the DLC become more polar, which in turn increases surface energy and thus provides for a more hydrophilic coating. In certain optional embodiments, UV treatment can also be used to cause the contact angle θ of the DLC inclusive layer to decrease and/or stay low.

The international patent application No. WO2014148479A1 describes the hydrophilic DLC film deposited on the surface of a smoothed base material, such as stainless steel, to suppress the adhesion of dirt, such as bacteria, to the surface of the base material. Such a DLC film can be fabricated by various plasma- or ion-based methods. The DLC can be doped with oxygen (O), nitrogen (N), silicon (Si), and silicon oxide (SiOₓ). The DLC film can also be irradiated with an oxygen plasma or nitrogen plasma so that the surface layer of the amorphous carbon film has a carboxyl group (-COOH), a hydroxyl group (-OH), or the like. In this way, the DLC film is further negatively charged to repel the negatively charged dirt particles.

The Japanese patent No. JP4704653B2 relates to microfluidic devices, including hydrophilic diamond-like glass (DLG) films that provide good optical, wetting, and flow properties. The amorphous carbon system, in this case, contains a considerable amount of silicon and oxygen, as in glass, but retains diamond-like properties. In these films, there is at least about 30% carbon, at least about 25% silicon, and no more than about 45% oxygen on a hydrogen-free basis. DLG films can be surface modified in an oxygen-containing plasma to yield a hydrophilic surface. In an example embodiment of this invention, the plasma-modified DLG surface was highly wettable by water with a contact angle θ of less than 10°.

The Chinese patent application No. CN114196937A provides a hydrophilic amorphous carbon film and is related to a preparation technology of a metal coating material. The hydrophilic amorphous carbon film is a Si-containing DLC film. The preparation method involves doping Si atoms in the amorphous carbon film and subsequently activating the film with oxygen plasma or oxygen ion beams. After 48 h of plasma activation, the water contact angle θ of the film was less than 7°.

The Japanese patent No. JP5706330B2 is related to the suppression of the aging of hydrophilic surfaces. Most hydrophilic surfaces treated according to conventional methods lose their hydrophilicity within a few hours or days. The reason is that the hydrophilic surface has a relatively high surface energy, so it tends to lower its surface energy by binding with water or hydrocarbon molecules in the air. When such a binding occurs, the hydrophilicity disappears. In the patent, the surface of a Si-containing DLC (Si-DLC) thin film is treated with plasma using oxygen or nitrogen to render hydrophilicity to the surface to improve its corrosion resistance and blood compatibility. To maintain the hydrophilicity of the thin film surface for a long time, the Si content in the Si-DLC thin film is preferably 1.0 at.% to 2.5 at.%. In this case, when the thin film surface is activated by plasma, the surface roughness becomes 10 to 20 nm, and the hydrophilicity of the surface is maintained for a long time.

The US patent No. US7033649B2 discloses that a scratch-resistant hydrophilic anti-fogging coating can be manufactured by doping DLC with at least one polar-inducing dopant, such as B and/or N, which increases the graphite-like phase amount in the coating. The polar-inducing dopant's atomic percentage of the polar-inducing dopant(s) should be no greater than 10%. The sp³ type bonds (e.g., C-C bonds) increase the coating hardness and scratch resistance, while the graphitic sp² type bonds (e.g., C-C, C-N, and/or C-B bonds) cause the coating to be more hydrophilic and have a lower contact angle. The DLC coating may also be exposed to UV radiation to cause the coating to become hydrophilic or more hydrophilic.

The closest prior art to the present invention is the European patent application EP22212120.4, filed 08.12.2022, which discloses a technology of roughening optoelectronic encoder scales for the scale surface hydrophilicity and anti-fogging effect, and also further coating the surface with Diamond-like-carbon (DLC) coatings, which is scratch-resistant and further increases the anti-fogging effect. In view of the present invention, the application EP EP22212120.4 discloses a more complex surface processing technology.

### SUMMARY OF INVENTION

**Problem.** This invention solves the fogging problem of the photoelectric encoders, and thereby enables them to be used near- or below- the dew point temperature, by coating the optical scales and scanning reticles of encoders with transparent hydrophilic DLC films, which also increases the mechanical durability of the coated surfaces.

Optical scales and reticles for precise displacement and rotation measurements usually consist of micrometer-scale chromium (Cr) gratings on a glass substrate. As the two periodic gratings (scale and reticle) move relative to one another, the incident light is modulated: if the gaps overlap, the light passes, and when the Cr lines of one grating overlap with the gaps of another grating, the light does not pass. Photocells convert light modulation into electric signal modulation. In the case of an open photoelectric encoder, the scanning reticle can be formed on the encoder window.

One of the problems faced by photoelectric encoder users is the fogging of the optical scale and/or encoder reticle when saturated water vapor condenses into droplets on the transparent surface. These droplets act as optical lenses and, depending on their size, negatively affect the optical transmittance or at least distort the trajectories of optical signals, which can result in measurement errors. The surface of the optical scale or reticle is complex: the glass substrate is naturally hydrophilic with a water contact angle of less than 60°. The Cr pattern has a much higher surface energy, so its water contact angle is close to 90°. The contact angle of the glass can be further reduced by additional surface processing, such as plasma treatment, and it is difficult to change the wettability of the Cr surface. Therefore, the wettability of the complex scale or reticle surface is insufficient for forming a continuous liquid layer, which would ensure high optical transmittance.

**Solution.** An optical scale or reticle consisting of Cr or another light reflective metal pattern on the glass substrate can be protected from fogging by depositing a hydrophilic scratch- and wear-resistant DLC film with a thickness of 30 - 350 nm at least on one side and, preferably, on both sides of the scale or reticle. The thickness of the reflective metal pattern usually is about 100 nm. The DLC coating on the metal side of the scale or reticle must be at least 20 nm thicker than the metal pattern to form a continuous film with high surface energy. The maximum coating thickness is limited by internal stresses causing poor substrate adhesion and optical transmittance. Therefore, the preferred thickness of the DLC film on the metal side of the scale or reticle is 120 - 200 nm. The coating may be slightly thinner on the glass side. In this case, the preferred thickness of the DLC film is 50 - 100 nm.

Non-fogging optical scales or scanning reticles are produced using conventional optical scales or reticles made on a smooth glass substrate (the root mean square roughness of the glass substrate R_{q} is less than 1 nm) by evaporating Cr or another suitable reflective metal layer and lithographically defining the desired micrometer-scale pattern. The smoothness of the glass surface is crucial to ensure high-quality patterning and low scattering of optical signals. Before the DLC coating, the surface of the optical scales or reticles is cleaned using a wet chemical cleaning process: ultrasonic cleaning in an acetone bath for at least 6 min, followed by ultrasonic cleaning in an isopropyl alcohol bath for at least 3 min, followed by thorough rinsing in deionized (DI) water with a resistivity higher than 18.2 MΩ/cm, and drying in a nitrogen stream. Chemically cleaned optical scales and reticles are immediately coated with transparent hydrophilic DLC.

The hydrophilic DLC film can be grown by doping the film with N, B, Si, SiOₓ, or another polar-inducing dopant. Various combinations of the polar dopants mentioned above are also possible. Plasma-enhanced chemical vapor deposition, reactive sputtering, ion beam deposition, cathodic arc evaporation, and pulsed laser deposition can be used for this purpose.

Another exemplary embodiment is a hydrophilic film deposition by reactive magnetron sputtering of the graphite target using the argon gas, oxygen gas, and hexamethyldisilane vapor mixture. Hexamethyldisiloxane, tetra orthosilicate, and other volatile carbon and silicon-containing liquids can be used instead of hexamethyldisilane. Silicon-containing gases can also be used for this purpose. In such a way, super hydrophilic films can be grown with a water contact angle θ below 10°. In this case, the deposition conditions must be optimized because, in such a way, highly hydrophobic (with a water contact angle above 100°) films can also be deposited. It means that the film composition, such as the amount of the amorphous carbon phase and SiOₓ phase, must be thoroughly adjusted.

An alternative way to achieve hydrophilicity is post-treatment of the deposited undoped or doped DLC film by oxygen plasma or oxygen ion beam to create hydrophilic hydroxyl or carboxyl groups on the DLC surface. Another way is DLC post-treatment by UV irradiation. Notably, it can be used for DLC films doped with titanium oxide (DLC: TiO₂).

The main technical effects and advantages of the non-fogging optical scales and scanning reticles made on the smooth glass substrate, according to the present invention, are:
- simplification of surface processing and scale/encoder devices production technology, with respect to the closest prior art (European patent application EP EP22212120.4), by eliminating the step of glass roughening to increase surface hydrophilicity;
- further, by eliminating the surface roughening step, the quality of lithography is improved, thus ensuring defect-free patterning and reducing the roughness of line edges;
and furthermore:
- increasing the resolution of the device;
- reduction of the scattering of optical signals;
- increasing the specular reflection from the metalized surface.

### DESCRIPTION OF DRAWINGS

Possible embodiments of the present invention are described in the accompanying drawings, where:
- **Figure 1**: shows a photograph of the optical scale of the photoelectric encoder where reflective metal patterns perform the function of the grating track (1A) and the reference mark zone (1B);
- **Figure 2**: shows a photograph of the scanning reticle of the photoelectric encoder consisting of a glass window (1C) and tracks in the form of reflective metal patterns (1D);
- **Figure 3**: shows a cross-section of an optical scale, where a reflective metal pattern (1) is formed on one side of the glass substrate (2);
- **Figure 4**: shows a cross-section of a non-fogging optical scale coated on one side with a hydrophilic DLC film (3);
- **Figure 5**: shows a cross-section of a non-fogging optical scale coated on both sides with a hydrophilic DLC film (3);
- **Figure 6**: shows the dependence of the optical transmittance of the silicate glass and the hydrophilic DLC: SiOₓ coated silicate glass on the water vapor condensation time.

### DETAILED DESCRIPTION OF INVENTION

Abbreviations used in the description:
DLC - diamond-like carbon;
N - nitrogen;
B - boron;
θ - water contact angle;
P - phosphorus;
As - arsenic;
S - sulphur;
Sb - antimony;
Ga - gallium;
In - indium;
UV - ultraviolet;
O - oxygen;
Si - silicon;
SiOₓ - silicon oxide;
COOH - carboxyl group;
OH - hydroxyl group;
DLG - diamond-like glass;
Si-DLC - Si-containing diamond-like carbon;
Cr - chromium;
R_{q} - surface root mean square (RMS) roughness;
DLC: N - diamond-like carbon film containing nitrogen;
Ar - argon;
TiO₂ - titanium oxide;
Ti - titanium;
DLC: TiO₂ - diamond-like carbon film doped with titanium oxide.

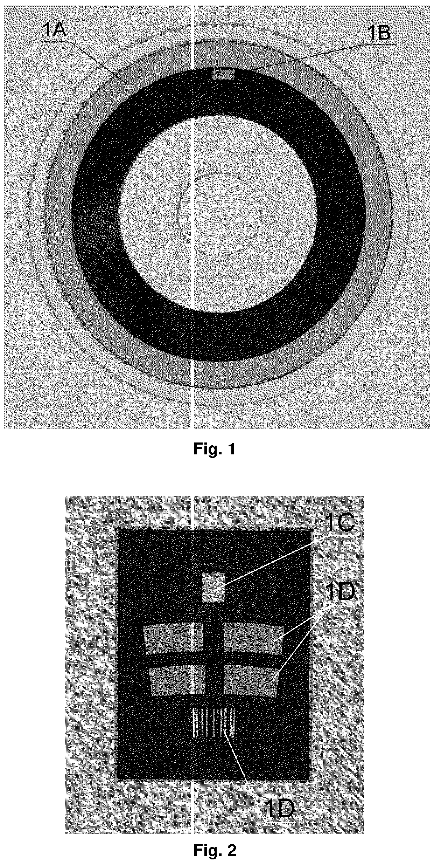

The present invention relates to solving the fogging problem of optical scales (Fig. 1) and scanning reticles (Fig. 2) of photoelectric encoders. In the following description, the term "optical scale" denotes not only the optical scale but also the scanning reticle.

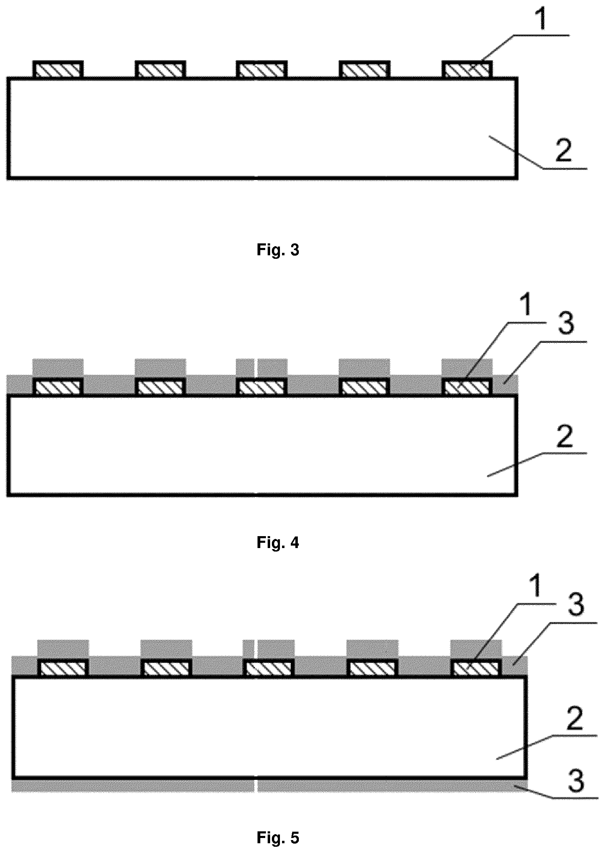

Optical scales for precise displacement and rotation measurements (Fig. 3) usually consist of a micrometer-scale reflective metal pattern (1) on a glass substrate (2). Such scales are not resistant to fogging. According to this invention, the non-fogging optical scale is a device comprising a known optical scale for the photoelectric encoder, made on the smooth (R_{q} < 1 nm) glass substrate and protected from fogging by depositing a hydrophilic scratch and wear-resistant DLC film (3) with a thickness of 30 - 350 nm at least on the one side (Fig. 4) and preferably on both sides (Fig. 5) of the scale. The preferred thickness of the DLC film on the metal side of the scale is 120 - 200 nm, whereas the preferred thickness of the DLC film on the glass side is 50 - 100 nm.

Hereinafter, the present invention will be described in more detail based on certain example embodiments of the hydrophilic antifogging DLC films and their deposition techniques. The description of the embodiments includes numerous specific details to provide a complete and comprehensible explanation of the specific features and modifications. However, these embodiments are merely illustrative and do not limit the scope of the invention or restrict the possible applications, which can be implemented without following these specific instructions.

In some embodiments, the hydrophilic DLC films are deposited on chemically cleaned optical scales by reactive direct current magnetron sputtering of the graphite target using Ar as a sputtering gas, and vapor of the hexamethyldisilane, hexamethyldisiloxane, tetra orthosilicate, or other carbon- and silicon-containing volatile liquid. Films are deposited on the grounded substrate. Negatively biased substrates can also be used. Reactive oxygen gas can be used as an additional source of oxygen. The work pressure during the thin film deposition process is in the range of 10⁻³ - 2×10⁻² mbar. In such a way, hydrophilic DLC: SiOₓ films can be grown. The deposition process conditions must be thoroughly optimized because the contact angle of the thin film with water can be varied in the range of 0°-105° using this growth method. The larger additional oxygen flows result in the deposition of hydrophilic or even super hydrophilic DLC:SiOₓ and SiOₓ films due to the increased O/Si atomic concentration ratio and excessive carbon phase etching. The hydrophilicity of the deposited DLC:SiOₓ and SiOₓ films can be increased by the oxygen ion beam or plasma post-treatment. In this case, surfaces with a water contact angle θ less than 1° are fabricated.

In some embodiments, the ion beam deposition of the hydrophobic hydrogenated DLC and DLC:SiOₓ films by an anode layer ion source is used as an alternative technology for non-fogging optical scale fabrication. The ion beam energy can be in the 300-1000 eV range. Acetylene gas, or the mixture of hexamethyldisiloxane vapor and hydrogen gas, respectively, is used as the reagents. The surface roughness of the films (R_{q}) is in the 0.2-0.6 nm range. Afterward, deposited DLC or DLC:SiOₓ films are in-situ treated by an oxygen ion beam to make a superhydrophilic surface. Alternatively, different ex-situ oxygen plasma treatments, such as atmospheric plasma, can be applied for smooth surface fabrication (R_{q} is in the range of 1-2 nm) with water contact angles θ less than 1°.

In other embodiments, hydrophilic DLC films containing nitrogen (DLC:N; otherwise, amorphous carbon nitride films) are deposited on chemically cleaned optical scales by reactive magnetron sputtering of the graphite target using Ar as the sputtering gas and nitrogen as the reactive gas. Alternatively, nitrogen ion beam-assisted magnetron sputtering can be used to overcome the drawbacks of reactive magnetron sputtering, such as target poisoning. The work pressure during the thin film deposition process is in the 7×10⁻⁴ - 3.3×10⁻² mbar range. These films can contain 10-30 at.% nitrogen. Their contact angle with water can be as low as 30°. Afterward, deposited DLC:N films are in-situ treated by an oxygen ion beam or oxygen plasma to make a superhydrophilic surface with a water contact angle θ less than 1°.

In further embodiments, DLC films are post-treated by UV irradiation. In particular, such a post-treatment can be used for DLC:TiO₂ films. DLC:TiO₂ films can be grown using reactive radio frequency current magnetron sputtering of the titanium (Ti) target using Ar as sputtering gas and hydrocarbon gas (e.g., methane, acetylene, propane, butane) or vapor (e.g., pentane, hexane) as a carbon and hydrogen source. These films can also be deposited by reactive direct current magnetron sputtering or pulsed current magnetron sputtering, or high power impulse magnetron sputtering of the Ti target using Ar as a sputtering gas, hydrocarbon gas as a carbon and hydrogen source, and oxygen gas as an oxygen source. These films can also be deposited by reactive direct current magnetron sputtering or pulsed current magnetron sputtering, or high power impulse magnetron sputtering of the graphite target using metallorganic Ti-containing vapor such as, e.g., titanium isopropoxide as a source of the Ti and O. These films can also be deposited by ICP plasma beam deposition using a hydrocarbon gas or vapor as a carbon source and metallorganic Ti containing vapor such as, e.g., titanium isopropoxide as a source of the Ti and O. DLC:TiO₂ films became hydrophilic only after UV treatment.

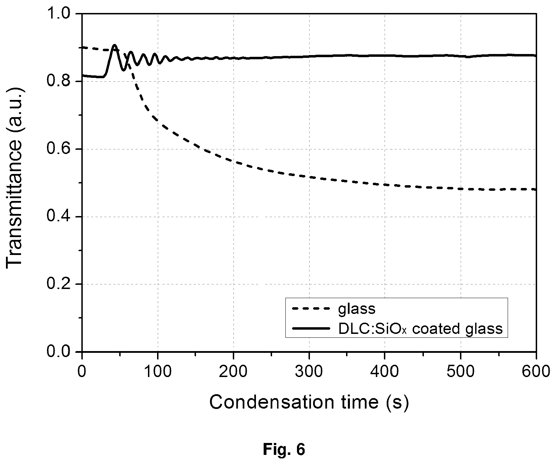

To illustrate the effectiveness of hydrophilic DLC films for antifogging applications, fogging the hydrogenated DLC:SiOₓ films deposited by an anode layer ion source on the optically smooth silicate glass substrates and treated by oxygen plasma with a power density of 0.3 W/cm² for 3 min was investigated. The thickness of the tested DLC films was about 110 nm, and the water contact angle θ after the plasma treatment was less than 1°. Fogging tests were performed by placing uncoated and DLC-coated glasses horizontally in a moisture chamber below the dew point temperature and measuring their optical transmittance at 890 nm over time. Fig. 6 shows the dependence of the optical transmittance of the silicate glass and the hydrophilic DLC:SiOₓ coated silicate glass on the water vapor condensation time. It is evident from this figure that the hydrophilic DLC film prevents surface fogging and ensures high optical transmittance of the glass substrate below the dew point.

## Claims

1. An optical scale device for a photoelectric linear or rotary encoder, said optical scale device comprising
- an optically smooth glass substrate (2) wherein the root-mean-square roughness R_{q} is less than 1 nm,
- a lithographically defined micrometer-scale reflective metal pattern (1) with a thickness of 50-200 nm,
- a transparent hydrophilic scratch and wear-resistant diamond-like-carbon DLC film (3) with a thickness of 30-350 nm grown on both surfaces of the optical scale device.

2. A scanning reticle device for the photoelectric linear or rotary encoder, said scanning reticle device comprising
- an optically smooth glass substrate (2) wherein the root-mean-square roughness R_{q} is less than 1 nm,
- a lithographically defined micrometer-scale reflective metal pattern (1) with a thickness of 50-200 nm,
- a transparent hydrophilic scratch and wear-resistant diamond-like-carbon DLC film (3) with a thickness of 30-350 nm grown on both surfaces of the scanning reticle device.

3. The devices according to claims 1 and 2, wherein the thickness of the DLC film on the metal side (1) of each device is 120-200 nm, and on the glass side (2) of each device is 50-100 nm.

4. The devices according to claims 1 and 2, or to claim 3, wherein the DLC film further comprises any diamond-like-carbon atoms, graphite-like carbon atoms, hydrogen atoms, or any of the doped N, B, Si, SiOₓ, TiO₂ or other polar impurities, for an increasing hydrophilicity of the surfaces of the devices.

5. A photoelectric encoder comprising
- the optical scale device according to claim 1, or claims 1 and any one of 3-4,
- the scanning reticle device according to claim 2, or claims 2 and any one of 3-4,
wherein said devices are mutally arranged for operating said encoder.

6. The encoder according to claim 5, wherein the scanning reticle device is implemented as an integrated window of said encoder.

7. A method of fabricating the devices according to claims 1 and 2, or to any one of claims 3 to 4, the method comprising steps of
a) surface preparation:
• ultrasonic cleaning in an acetone bath for at least 6 min, followed by
• ultrasonic cleaning in an isopropyl alcohol bath for at least 3 min, followed by
• thorough rinsing in deionized water with a resistivity higher than 18.2 MΩ/cm, and
• drying in a nitrogen stream,
b) depositing a transparent hydrophilic scratch and wear-resistant DLC film on at least one side, and preferably both sides of the device.

8. The method of claim 7, wherein during step b), a hydrophilic DLC film doped with N, B, Si, SiOₓ, or other polar-inducing dopants, or various combinations of polar dopants is grown by plasma-enhanced chemical vapor deposition, reactive sputtering, ion beam deposition, cathodic arc evaporation, and pulsed laser deposition.

9. The method of claim 7, wherein during the step b), the hydrophilic DLC film is deposited by reactive magnetron sputtering of the graphite target using the mixture of argon gas, oxygen gas, and hexamethyldisilane vapor (hexamethyldisiloxane or tetra orthosilicate, or other volatile liquid containing carbon and silicon, or a silicon-containing gas may be used instead of hexamethyldisilane).

10. The method of claim 7, wherein the deposited undoped or doped DLC film is post-treated by an oxygen plasma or an oxygen ion beam.

11. The method of claim 7, wherein during step b) the hydrogenated DLC film is deposited by an anode layer ion source using acetylene gas or the DLC:SiOₓ film is deposited by an anode layer ion source using the mixture of hexamethyldisiloxane vapor and hydrogen gas, and it is post-treated by an oxygen plasma or oxygen ion beam.

12. The method of claim 7, wherein during step b) the hydrophilic DLC:N film is deposited by reactive magnetron sputtering of the graphite target using Ar as the sputtering gas and nitrogen as the reactive gas, or the hydrophilic DLC:N film is deposited by nitrogen ion beam assisted magnetron sputtering, and it is treated in situ by an oxygen ion beam or an oxygen plasma.

13. The method of claim 7, wherein during step b) the DLC:TiO₂ film is grown by reactive radio frequency current magnetron sputtering or reactive direct current magnetron sputtering or pulsed current magnetron sputtering or high power impulse magnetron sputtering of the Ti target using Ar as the sputtering gas, hydrocarbon gas (e.g. methane, acetylene, propane, butane) or vapor (e.g. pentane, hexane) as a carbon and hydrogen source and oxygen gas as an oxygen source, and it is post-treated by UV irradiation.

14. The method of claim 7, wherein during step b) the DLC:TiO₂ film is deposited by ICP plasma or reactive direct current magnetron sputtering or pulsed current magnetron sputtering or high power impulse magnetron sputtering of the graphite target using metallorganic Ti containing vapor such as, e.g., titanium isopropoxide as a source of the Ti and O, and it is post-treated by UV irradiation.

## Patentansprüche

1. Optische Skalenvorrichtung für einen photoelektrischen Linear- oder Drehgeber, wobei die optische Skalenvorrichtung Folgendes umfasst
- ein optisch glattes Glassubstrat (2), bei dem die quadratische mittlere Rauheit R_{q} weniger als 1 nm beträgt,
- ein lithografisch definiertes reflektierendes Metallmuster (1) im Mikrometerbereich mit einer Dicke von 50-200 nm,
- eine transparente hydrophile kratz- und verschleißfeste diamantartige Kohlenstoff-Schicht, DLC-Schicht, (3) mit einer Dicke von 30-350 nm, die auf beiden Oberflächen der optischen Skalenvorrichtung aufgewachsen ist.

2. Abtastrastervorrichtung für den photoelektrischen Linear- oder Drehgeber, wobei die Abtastrastervorrichtung Folgendes umfasst
- ein optisch glattes Glassubstrat (2), bei dem die quadratische mittlere Rauheit R_{q} weniger als 1 nm beträgt,
- ein lithografisch definiertes reflektierendes Metallmuster (1) im Mikrometerbereich mit einer Dicke von 50-200 nm,
- eine transparente hydrophile kratz- und verschleißfeste diamantartige Kohlenstoff-Schicht, DLC-Schicht, (3) mit einer Dicke von 30-350 nm, die auf beiden Oberflächen der Abtastrastervorrichtung aufgewachsen ist.

3. Vorrichtungen nach den Ansprüchen 1 und 2, wobei die Dicke der DLC-Schicht auf der Metallseite (1) jeder Vorrichtung 120-200 nm beträgt und auf der Glasseite (2) jeder Vorrichtung 50-100 nm beträgt.

4. Vorrichtungen nach den Ansprüchen 1 und 2 oder nach Anspruch 3, wobei die DLC-Schicht ferner beliebige diamantartige Kohlenstoffatome, grafitartige Kohlenstoffatome, Wasserstoffatome oder beliebige der dotierten N-, B-, Si-, SiOx-, TiO₂- oder andere polare Verunreinigungen umfasst, für eine zunehmende Hydrophilie der Oberflächen der Vorrichtungen.

5. Photoelektrischer Geber, umfassend
- die optische Skalenvorrichtung nach Anspruch 1 oder den Ansprüchen 1 und einem von 3-4,
- die Abtastrastervorrichtung nach Anspruch 2 oder den Ansprüchen 2 und einem von 3-4,
wobei die Vorrichtungen gegenseitig zum Betreiben des Gebers ausgelegt sind.

6. Geber nach Anspruch 5, wobei die Abtastrastervorrichtung als ein integriertes Fenster des Gebers implementiert ist.

7. Verfahren zum Herstellen der Vorrichtungen nach den Ansprüchen 1 und 2 oder nach einem der Ansprüche 3 bis 4, wobei das Verfahren die folgenden Schritte umfasst
a) Oberflächenvorbereitung:
• Ultraschallreinigen in einem Acetonbad für mindestens 6 Minuten, gefolgt von
• Ultraschallreinigen in einem Bad mit Isopropylalkohol für mindestens 3 Minuten, gefolgt von
• gründlichem Spülen in entionisiertem Wasser mit einer Widerstandsfähigkeit von mehr als 18,2 MΩ/cm und
• Trocknen in einem Stickstoffstrom,
b) Abscheiden einer transparenten hydrophilen kratz- und verschleißfesten DLC-Schicht auf mindestens einer Seite, vorzugsweise beide Seiten der Vorrichtung.

8. Verfahren nach Anspruch 7, wobei während des Schritts b) eine hydrophile DLC-Schicht, die mit N, B, Si, SiOₓ oder anderen polaritätsinduzierenden Dotierstoffen oder verschiedenen Kombinationen polarer Dotierstoffe dotiert ist, durch plasmaunterstützte chemische Gasphasenabscheidung, reaktives Sputtern, Ionenstrahlabscheidung, Kathodenbogenverdampfung und Laserstrahlverdampfen aufgewachsen wird.

9. Verfahren nach Anspruch 7, wobei während des Schritts b) die hydrophile DLC-Schicht durch reaktives Magnetron-Sputtern des Graphit-Targets unter Verwendung der Mischung aus Argongas, Sauerstoffgas und Hexamethyldisilan-Dampf abgeschieden wird (anstelle von Hexamethyldisilan kann auch Hexamethyldisiloxan oder Tetraorthosilikat oder eine andere flüchtige Flüssigkeit, die Kohlenstoff und Silizium enthält, oder ein siliziumhaltiges Gas verwendet werden).

10. Verfahren nach Anspruch 7, wobei die abgeschiedene undotierte oder dotierte DLC-Schicht mit einem Sauerstoffplasma oder einem Sauerstoffionenstrahl nachbehandelt wird.

11. Verfahren nach Anspruch 7, wobei während des Schritts b) die hydrierte DLC-Schicht durch eine Anodenschicht-Ionenquelle unter Verwendung von Acetylengas abgeschieden wird oder die DLC:SiOx-Schicht durch eine Anodenschicht-Ionenquelle unter Verwendung der Mischung aus Hexamethyldisiloxan-Dampf und Wasserstoffgas abgeschieden und mit einem Sauerstoffplasma oder einem Sauerstoffionenstrahl nachbehandelt wird.

12. Verfahren nach Anspruch 7, wobei während des Schritts b) die hydrophile DLC:N-Schicht durch reaktives Magnetron-Sputtern des Graphit-Targets unter Verwendung von Ar als das Sputtergas und Stickstoff als das Reaktionsgas abgeschieden wird oder die hydrophile DLC:N-Schicht durch Stickstoffionenstrahl-unterstütztes Magnetron-Sputtern abgeschieden und in situ mit einem Sauerstoffionenstrahl oder einem Sauerstoffplasma behandelt wird.

13. Verfahren nach Anspruch 7, wobei während des Schritts b) die DLC:TiO₂-Schicht durch reaktives Hochfrequenz-Magnetron-Sputtern oder reaktives Gleichstrom-Magnetron-Sputtern oder Pulsstrom-Magnetron-Sputtern oder Hochleistungs-Impuls-Magnetron-Sputtern des Ti-Targets unter Verwendung von Ar als das Sputtergas, Kohlenwasserstoffgas (z. B. Methan, Acetylen, Propan, Butan) oder -dampf (z. B. Pentan, Hexan) als eine Kohlenstoff- und Wasserstoffquelle und Sauerstoffgas als eine Sauerstoffquelle aufgewachsen und durch UV-Bestrahlung nachbehandelt wird.

14. Verfahren nach Anspruch 7, wobei während des Schritts b) die DLC:TiO₂-Schicht durch ICP-Plasma oder reaktives Gleichstrom-Magnetron-Sputtern oder Pulsstrom-Magnetron-Sputtern oder Hochleistungs-Impuls-Magnetron-Sputtern des Graphit-Targets unter Verwendung von metallorganischem Tihaltigem Dampf, wie z. B. Titaniumisopropoxid, als eine Quelle für das Ti und O abgeschieden und durch UV-Bestrahlung nachbehandelt wird.

## Revendications

1. Dispositif d'échelle optique pour encodeur photoélectrique linéaire ou rotatif, ledit dispositif d'échelle optique comprenant
- un substrat de verre optiquement lisse (2) dans lequel la rugosité quadratique moyenne R_{q} est inférieure à 1 nm,
- un motif métallique réfléchissant à l'échelle micrométrique défini par lithographie (1) d'une épaisseur de 50 à 200 nm,
- un film transparent, hydrophile, résistant aux rayures et à l'usure, de carbone de type diamant, DLC, (3) d'une épaisseur de 30 à 350 nm cultivé sur les deux surfaces du dispositif d'échelle optique.

2. Dispositif de réticule de balayage pour encodeur photoélectrique linéaire ou rotatif, ledit dispositif de réticule de balayage comprenant
- un substrat de verre optiquement lisse (2) dans lequel la rugosité quadratique moyenne R_{q} est inférieure à 1 nm,
- un motif métallique réfléchissant à l'échelle micrométrique défini par lithographie (1) d'une épaisseur de 50 à 200 nm,
- un film transparent, hydrophile, résistant aux rayures et à l'usure, de carbone de type diamant, DLC, (3) d'une épaisseur de 30 à 350 nm cultivé sur les deux surfaces du dispositif de réticule de balayage.

3. Dispositifs selon les revendications 1 et 2, dans lesquels l'épaisseur du film DLC sur le côté métallique (1) de chaque dispositif est de 120 à 200 nm et sur le côté en verre (2) de chaque dispositif est de 50 à 100 nm.

4. Dispositifs selon les revendications 1 et 2, ou selon la revendication 3, dans lesquels le film DLC comprend en outre des atomes de carbone de type diamant, des atomes de carbone de type graphite, des atomes d'hydrogène ou l'une des impuretés dopées N, B, Si, SiOₓ, TiO₂ ou autres impuretés polaires, pour une hydrophilie accrue des surfaces des dispositifs.

5. Encodeur photoélectrique comprenant
- le dispositif d'échelle optique selon la revendication 1, ou les revendications 1 et l'une quelconque des revendications 3 à 4,
- le dispositif de réticule de balayage selon la revendication 2, ou les revendications 2 et l'une quelconque des revendications 3 à 4, dans lesquels lesdits dispositifs sont agencés mutuellement pour actionner ledit encodeur.

6. Encodeur selon la revendication 5, dans lequel le dispositif de réticule de balayage est mis en œuvre comme une fenêtre intégrée dudit encodeur.

7. Procédé de fabrication des dispositifs selon les revendications 1 et 2, ou selon l'une quelconque des revendications 3 ou 4, le procédé comprenant les étapes suivantes :
a) la préparation de surface :
• le nettoyage par ultrasons dans un bain d'acétone pendant au moins 6 minutes, suivi par
• le nettoyage par ultrasons dans un bain d'alcool isopropylique pendant au moins 3 min, suivi de
• le rinçage minutieux à l'eau déminéralisée d'une résistivité supérieure à 18,2 MΩ/cm, et
• le séchage dans un flux d'azote,
b) le dépôt d'un film DLC transparent, hydrophile, résistant aux rayures et à l'usure sur au moins une face, et de préférence sur les deux faces du dispositif.

8. Procédé selon la revendication 7, dans lequel, pendant l'étape b), un film DLC hydrophile dopé avec N, B, Si, SiOₓ, ou d'autres dopants inducteurs de polarité, ou diverses combinaisons de dopants polaires est cultivé par dépôt chimique en phase vapeur amélioré par plasma, par pulvérisation réactive, dépôt par faisceau d'ions, par évaporation par arc cathodique et par dépôt laser pulsé.

9. Procédé selon la revendication 7, dans lequel, pendant l'étape b), le film DLC hydrophile est déposé par pulvérisation magnétron réactive de la cible de graphite en utilisant le mélange de gaz argon, de gaz oxygène et de vapeur d'hexaméthyldisilane (l'hexaméthyldisiloxane ou le tétraorthosilicate, ou un autre liquide volatil contenant du carbone et du silicium, ou un gaz contenant du silicium peuvent être utilisés à la place de l'hexaméthyldisilane).

10. Procédé selon la revendication 7, dans lequel le film DLC non dopé ou dopé déposé est post-traité par un plasma d'oxygène ou un faisceau d'ions d'oxygène.

11. Procédé selon la revendication 7, dans lequel, pendant l'étape b), le film DLC hydrogéné est déposé par une source d'ions de couche anodique utilisant du gaz acétylène ou le film DLC:SiOₓ est déposé par une source d'ions de couche anodique utilisant le mélange de vapeur d'hexaméthyldisiloxane et de gaz hydrogène, et il est post-traité par un plasma d'oxygène ou un faisceau d'ions d'oxygène.

12. Procédé selon la revendication 7, dans lequel, pendant l'étape b), le film DLC:N hydrophile est déposé par pulvérisation magnétronique réactive de la cible de graphite en utilisant l'argon comme gaz de pulvérisation et l'azote comme gaz réactif, ou le film DLC:N hydrophile est déposé par pulvérisation magnétronique assistée par faisceau d'ions d'azote, et il est traité in situ par un faisceau d'ions d'oxygène ou un plasma d'oxygène.

13. Procédé selon la revendication 7, dans lequel, pendant l'étape b), le film DLC:TiO₂ est cultivé par pulvérisation cathodique magnétronique à courant radiofréquence réactif, par pulvérisation cathodique magnétronique à courant continu réactif, par pulvérisation cathodique magnétronique à courant pulsé ou par pulvérisation cathodique magnétronique à impulsions de haute puissance de la cible Ti en utilisant Ar comme gaz de pulvérisation, un gaz hydrocarboné (par exemple méthane, acétylène, propane, butane) ou une vapeur (par exemple pentane, hexane) comme source de carbone et d'hydrogène et un gaz oxygène comme source d'oxygène, et il est post-traité par irradiation UV.

14. Procédé selon la revendication 7, dans lequel, pendant l'étape b), le film DLC:TiO₂ est déposé par plasma ICP ou par pulvérisation cathodique magnétronique à courant continu réactif ou par pulvérisation cathodique magnétronique à courant pulsé ou par pulvérisation cathodique magnétronique à impulsions de haute puissance de la cible en graphite en utilisant une vapeur contenant du Ti organométallique telle que, par exemple, l'isopropoxyde de titane comme source de Ti et O, et il est post-traité par irradiation UV.
